# FASCICULE DE BREVET EUROPEEN

(11) **EP 2 011 678 B1**
(45) Date de publication et mention de la délivrance du brevet: **03.07.2019**
(21) Numéro de dépôt: 08158160.5
(22) Date de dépôt: 12.06.2008
(51) Int. Cl.: B60H 3/00

(54) **Dispositif de diffusion d'agent volatil muni d'un pulseur pour véhicule automobile**
Diffusionsvorrichtung für flüchtige Wirkstoffe, ausgestattet mit einem Gebläse für Fahrzeuge
Volatile agent diffusion device equipped with a blower for an automobile vehicle

(30) Priorité: 02.07.2007 FR 0704763
(43) Date de publication de la demande: 07.01.2009
(73) Titulaire: Valeo Systèmes Thermiques, 78321 Le Mesnil Saint Denis Cedex (FR)
(72) Inventeur: Feuillard, Vincent Valeo Systèmes Thermiques, 78320 Le Mesnil Saint Denis (FR); Loup, Didier Valeo Systèmes Thermiques, 78310 Maurepas (FR); Doskocil, Petr Valeo Systèmes Thermiques, 504 0 Novy Bydzov (CZ)
(74) Mandataire: Metz, Gaëlle

(56) Documents cités:
- EP-A- 1 398 187
- EP-A- 1 702 629
- WO-A-2004/105814
- WO-A-2005/100063
- FR-A- 2 815 294
- US-A1- 2004 067 729

## Description

La présente invention concerne un dispositif de diffusion d'agent volatil dans un habitacle d'un véhicule automobile.

Lorsqu'un passager souhaite traiter l'air de l'habitacle du véhicule, notamment parfumer l'air ambiant, il utilise un dispositif de diffusion d'agent volatil et le dispose sur un élément de l'habitacle, tel que le rétroviseur. Ce type de dispositif a les inconvénients de diffuser en continu un agent volatil, faisant office de parfum, dans l'habitacle et d'occuper un espace de l'habitacle pouvant gêner la vision du passager pour la conduite du véhicule. En outre, un tel dispositif doit être remplacé en totalité par un dispositif neuf lorsque tout l'agent volatil est diffusé, ceci engendrant un coût pour le passager.

Une solution à la diffusion continue et à la gène occasionnée par la localisation du dispositif de diffusion d'agent volatil est un dispositif de diffusion comprenant un moyen de réglage de la diffusion, ledit dispositif étant logé dans un système de ventilation, chauffage et/ou climatisation du véhicule automobile ou dans les conduits amenant l'air du système dans l'habitacle.

La solution dans laquelle le dispositif de diffusion est à l'intérieur du système de ventilation, chauffage et/ou climatisation présente néanmoins l'inconvénient d'être dépendante du fonctionnement du système de ventilation, chauffage et/ou climatisation. Puisque le dispositif est logé dans le système de ventilation, chauffage et/ou climatisation, la diffusion de l'air traité en agent volatil dans l'habitacle ne se fait que lorsque ce dernier est mis en oeuvre. La diffusion de l'agent volatil contenu dans le dispositif de diffusion est alors conditionnée par le réglage du débit et/ou celui de la distribution d'un flux d'air en provenance du système de ventilation, chauffage et/ou climatisation. Ainsi, lorsque le système de ventilation, chauffage et/ou climatisation ne fonctionne pas, aucun air traité n'est diffusé dans l'habitacle.

Un second inconvénient de cette solution est le remplacement de l'agent volatil. Un système de ventilation, chauffage et/ou climatisation se trouvant généralement sous la planche de bord du véhicule, le remplacement de l'agent volatil nécessite alors le démontage de plusieurs éléments du véhicule, tels que la planche de bord, la console centrale. En conséquence, un passager ne peut pas facilement changer d'agent volatil.

Lorsque le dispositif de diffusion est à l'intérieur des conduits amenant l'air du système de ventilation, chauffage et/ou climatisation dans l'habitacle, l'inconvénient relatif à la dépendance du dispositif de diffusion vis-à-vis du système de ventilation est toujours existant. WO2004105814 décrit un dispositif selon le préambule de la revendication 1.

La présente invention permet de résoudre les inconvénients ci-dessus et a pour objet un dispositif de diffusion pour véhicule automobile d'au moins un agent volatil, comprenant un boîtier comportant une entrée d'air ambiant, une sortie d'air traité, une chambre de diffusion apte à recevoir un insert, ledit insert logeant l'agent volatil, ladite chambre de diffusion étant en communication avec l'entrée d'air frais et la sortie d'air traité, le dispositif comprenant en outre un actionneur électrique entraînant en rotation l'insert selon un axe de rotation et un pulseur fixé sur le boîtier, la chambre de diffusion reçoit l'insert via la sortie d'air traité, en ce que ledit dispositif comporte un bouchon couvrant une sortie d'air traité du boîtier, des trous étant disposés sur le bouchon pour permettre l'évacuation du flux d'air traité du dispositif de diffusion et en ce que ledit dispositif de diffusion est apte à être logé dans un support d'aérateur de telle sorte qu'un flux d'air traité en sortie d'un trou rencontre le flux d'air F sortant de l'aérateur.

Le dispositif de diffusion selon l'invention présente les avantages suivants. Le premier avantage est une autonomie du dispositif de diffusion par rapport à un système de ventilation, chauffage et/ou climatisation. On comprend alors que le dispositif de diffusion est mis en oeuvre seul, quelque soit l'état de fonctionnement du système de ventilation, chauffage et/ou climatisation. Cette autonomie implique que le dispositif de diffusion est implantable dans un quelconque endroit de l'habitacle d'un véhicule. Possédant sa propre entrée d'air ambiant, sa propre sortie d'air traité et son propre pulseur, il n'est nul besoin d'installer le dispositif de diffusion à l'intérieur du système de ventilation, chauffage et/ou climatisation ou de réaliser des conduits supplémentaires reliant le dispositif de diffusion au système de ventilation, chauffage et/ou climatisation. Un gain de place dans l'habitacle du véhicule est alors obtenu.

L'implantation aisée du dispositif selon l'invention fournit également l'avantage de disposer ce dernier dans un élément de l'habitacle accessible par le passager, tel qu'une planche de bord ou une console centrale, de sorte qu'un changement d'agent volatil se fait par le passager sans difficulté.

Selon une première caractéristique, l'insert comprend au moins une cartouche logeant un parmi au moins un agent volatil, ladite cartouche étant introduite dans le boîtier ou extraite du boîtier par l'intermédiaire de la sortie d'air traité.

Selon une deuxième caractéristique, l'insert comprend au moins deux agents volatils distincts.

Selon une autre caractéristique, un système de commande est relié à l'actionneur, ledit système de commande permettant de sélectionner au moins une position de l'insert pour la diffusion ou non d'un des deux agents volatils et/ou de régler le débit du flux d'air traité.

Selon une autre caractéristique, un réglage du niveau d'intensité du flux d'air traité est effectuée par l'actionneur en faisant varier la position de l'insert par rapport à une fenêtre du boîtier.

Selon une autre caractéristique, chaque cartouche est maintenue dans l'insert par un moyen de retenue.

D'autres caractéristiques, détails et avantages de l'invention ressortiront plus clairement à la lecture de la description donnée ci-après à titre indicatif en relation avec des dessins dans lesquels :
- la figure 1 est une vue éclatée en perspective d'un dispositif de diffusion selon l'invention,
- les figures 2a et 2b sont des vues en coupe transversale du dispositif de diffusion selon l'invention,

- les figures 3a et 3b sont des vues en perspective du boîtier selon l'invention,
- la figure 4 est une vue en perspective de l'insert selon l'invention,
- les figures 5a et 5b sont des vues en perspective de la cartouche selon l'invention,
- les figures 6a et 6b sont des vues en perspective du bouchon selon l'invention,
- la figure 7 est un schéma simplifié du dispositif de diffusion selon l'invention.
- la figure 8 est une vue en perspective du support d'aérateur comprenant le dispositif de diffusion selon l'invention.

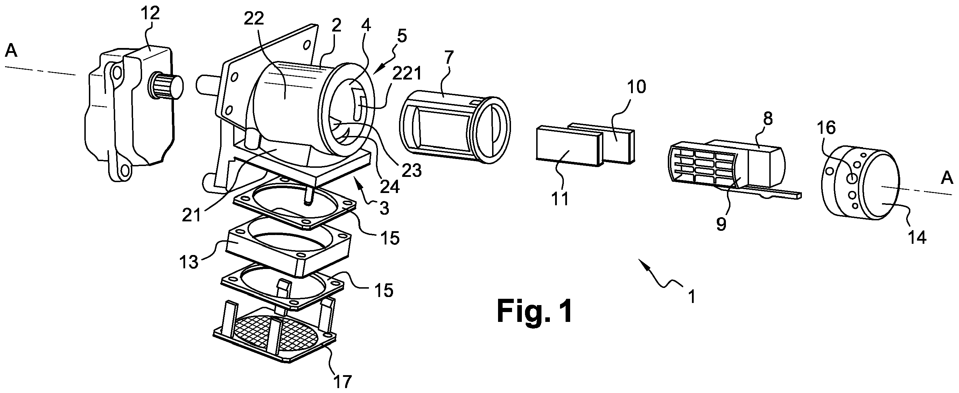

La figure 1 représente une vue du dispositif de diffusion 1 selon l'invention. Le dispositif de diffusion 1 comprend un boîtier 2, un insert 7, deux cartouches 8, 9 logeant deux mèches 10, 11, un actionneur électrique 12, un pulseur 13, un bouchon 14. Le boîtier 2, en matière plastique, tel que du polypropylène, comprend une chambre de diffusion 4, une entrée d'air ambiant 3 et une sortie d'air traité 5. L'entrée d'air ambiant 3 reçoit le pulseur 13. Ce dernier est muni d'une grille 17 et de deux amortisseurs 15. La chambre de diffusion 4 est apte à recevoir l'insert 7 via la sortie d'air traité 5. Cet insert 7 est mis en mouvement par l'actionneur 12 selon un axe de rotation A et loge deux cartouches 8, 9 chacune logeant une mèche 10, 11 contenant un agent volatil AV1, AV2 distinct. Enfin, le bouchon 14 couvre la sortie d'air traité 5 du boîtier 2. Pour permettre l'évacuation du flux d'air traité FT du dispositif de diffusion 1, des trous 16 sont disposés sur le bouchon 14.

On entend par « agent volatil », toute substance susceptible de se diffuser dans un flux d'air. Par exemple, un agent volatil est une substance odorante, désinfectante, anti-bactérienne, anti-allergène ou une fragrance.

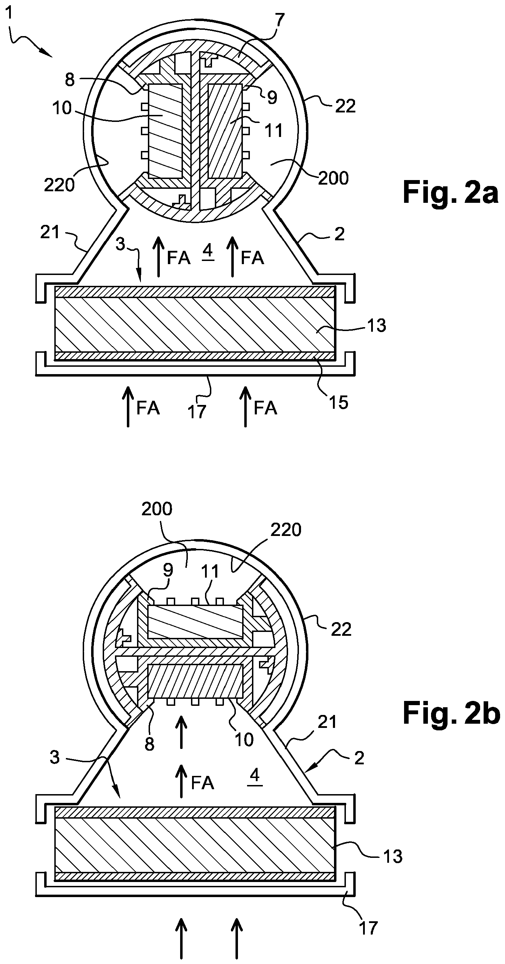

En figures 2a et 2b est représenté une coupe transversale du dispositif de diffusion 1. Le boîtier 2 est une unique pièce formant une chambre de diffusion 4, cette dernière ayant une entrée d'air ambiant 3 et une sortie d'air traité 5. Le boîtier 2 comprend deux parties ensemble de moulage, à savoir un cône creux 21 dont une première extrémité évasée forme l'entrée d'air ambiant 3 et un cylindre creux 22 définissant un espace de réception 200 de l'insert 7. Plus précisément une paroi interne 220 du cylindre creux 22 délimite l'espace de réception 200.

La chambre de diffusion 4 reçoit, par l'intermédiaire de l'entrée d'air ambiant 3, un flux air ambiant FA pulsé mis en mouvement par un pulseur 13. Ce dernier est fixé sur le boîtier 2. Le pulseur 13 est disposé en vis-à-vis de l'entrée d'air ambiant 3. Une grille 17 recouvre le pulseur 13 du côté opposé à celui de l'entrée d'air ambiant 3 et évite l'introduction de poussière ou d'élément pouvant empêcher le fonctionnement du pulseur 13 et/ou obstruer l'entrée d'air ambiant 3. Le pulseur 13 est de type axial, c'est-à-dire que le flux d'air ambiant aspiré et le flux d'air ambiant propulsé FA par le pulseur 13 ont la même direction. La présence du pulseur 13 dans le dispositif de diffusion 1 implique que ce dernier est totalement autonome par rapport à un système de ventilation, chauffage et/ou climatisation. Le dispositif de diffusion 1 peut être mis en oeuvre et diffuser au moins un agent volatil AV1, AV2 dans l'habitacle du véhicule sans que le système de ventilation, chauffage et/ou climatisation intervienne. L'indépendance du dispositif de diffusion 1 par l'intégration du pulseur 13 dans le boîtier 2 permet également de localiser le dispositif de diffusion 1 dans un quelconque endroit de l'habitacle du véhicule.

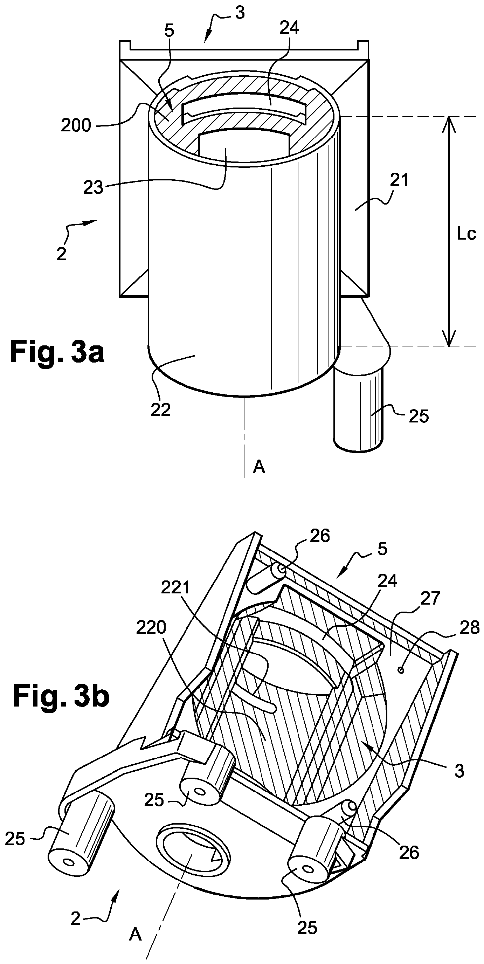

En figures 3a et 3b, le boîtier 2 est représenté seul. Selon la vue du dessus du boîtier 2 de la figure 3a, l'espace de réception 200, formé par l'intérieur du cylindre creux 22, est en communication aéraulique avec la partie de la chambre de diffusion 4 formée par le cône creux 21. Le cylindre creux 22 a un axe de rotation A. On entend par « communication aéraulique » le fait que le cylindre creux 22 et le cône creux 21 ont une ouverture en commun. Cette communication est assurée par une fenêtre 23. Lorsque l'insert 7 est à l'intérieur de l'espace de réception 200, il couvre la fenêtre 23. Ainsi, lorsqu'une mèche 10 contenue dans l'insert 7, se localise en face de la fenêtre 23, l'agent volatil AV1 est libéré et se mélange au flux d'air ambiant FA provenant de l'entrée d'air ambiant 3. Une fente 24 est également formée dans le cylindre 22 et assure l'évacuation du flux d'air traité FT vers le bouchon 14. Cette fente 24 assure la communication aéraulique entre l'entrée d'air ambiant 3 et la sortie d'air traité 5. Lorsque l'insert 7 est logé dans le boîtier 2, il n'obture pas la fente 24 du fait que sa longueur Li est inférieur à la longueur Lc du cylindre creux 22. Le boîtier 2 comprend également un réceptacle 25 contenant un alésage fileté non représenté. Ce réceptacle 25 permet de fixer le boiter 2 via une vis sur une partie du véhicule, par exemple une planche de bord.

En figure 3b, le boîtier 2 est illustré selon une vue du dessous. Une rainure 221 est creusée dans la paroi interne 220 et coopère avec une protubérance 143 du bouchon 14 pour former un moyen de fixation MF. Cette rainure 221 forme un « L » de sorte que le bouchon 14 est fixé sur le boîtier 2 selon une fermeture de type baïonnette. La protubérance 143 atteint la fin de la rainure lorsque le bouchon 14 a effectuée une rotation de 90° selon l'axe A. Une pluralité de réceptacle 25 est formée sur le boîtier 2 pour assurer une fixation correcte du boîtier 2 sur un élément du véhicule. L'entrée d'air ambiant 3 comporte un bord périphérique 27. Ce dernier 27 supporte le pulseur 13 lorsqu'il est fixé au boîtier 2 par l'intermédiaire d'une vis coopérant avec un alésage fileté 28 et de tiges 26. Selon une variante de l'invention, le pulseur 13 est fixé au boîtier 2 au moyen de colle ou de rivets.

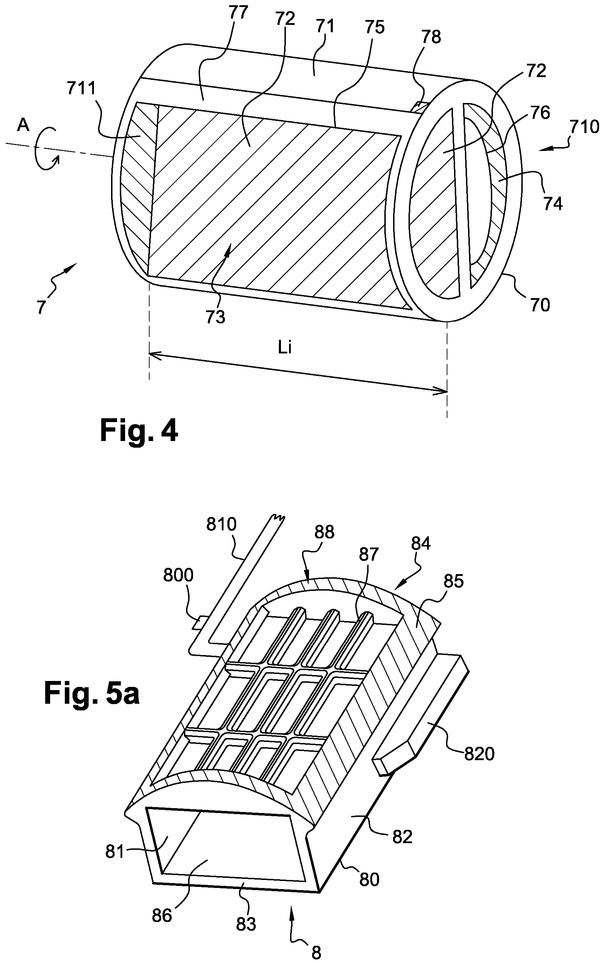

En figure 4, l'insert 7 est représenté seul. Ce dernier 7 est un cylindre 70 creux. Cet insert 7 est mobile en rotation dans le boîtier 2 selon un axe de rotation A par l'intermédiaire d'un actionneur 12. Le cylindre 70 comprend une paroi périphérique 71, un premier côté 710 ouvert, un deuxième côté 711 fermé et une cloison 72. Le cylindre 70 a une longueur Li. La cloison 72 s'étend sur toute la longueur Li du cylindre 70 et divise ce dernier en deux cavités 73, 74, chacune dédiée à la réception d'une cartouche 8, 9. Chaque cavité 73, 74 est distincte l'une de l'autre en ce qu'aucun échange aéraulique, et notamment échange d'agent volatil, ne peut se réaliser. Le premier côté 710 ouvert permet d'introduire une cartouche 8, 9 dans la cavité 73, 74 correspondante. Le deuxième côté fermé 711 permet de maintenir la cartouche logée dans la cavité. L'insert 7 comprend également deux orifices 75, 76 distincts formés dans la paroi périphérique 71. Chaque orifice 75, 76 est associé à une cavité 73, 74. Les orifices 75, 76 sont de forme rectangulaire ou carrée et sont diamétralement opposés. Entre les deux orifices 75, 76, la paroi périphérique 71 est pleine. Chaque orifice 75, 76 est entouré d'un moyen d'étanchéité ME, tel qu'une lèvre 77 en matière plastique souple, coopérant avec la paroi interne 220 du cylindre 22. Ainsi, aucune diffusion simultanée de deux agents volatils n'est possible. L'insert 7 comprend également deux évidements 78, 79 diamétralement opposés. Chaque évidement 78, 79 est associé à une cavité 73, 74. Ces deux évidements, diamétralement opposés, coopèrent avec des ergots 800 localisés sur les cartouches 8, 9 pour former un moyen de retenue MR.

L'insert 7 comporte deux cartouches 8, 9, chacune recevant une mèche 10, 11 contenant un agent volatil AV1, AV2 distinct. Chaque cartouche 8, 9 est en matière plastique et de structure identique. En conséquence, seule une première cartouche 8 sera décrite à l'aide de la figure 5a.

La première cartouche 8 est constituée par une cage 80 dont la forme générale est rectangulaire selon une vue du dessus. La cage 80 comprend deux flancs longitudinaux 81, 82, deux flancs latéraux 83, 84 et deux grandes faces 85, 86. Un premier flanc latéral 83 est ouvert et permet l'introduction d'une mèche 10. Une fois la première mèche 10 insérée dans la première cavité 73 de la première cartouche 8, un couvercle amovible non représenté est posé sur le premier flanc latéral 83 pour obturer ce dernier et empêche toute diffusion de l'agent volatil AV1 par le premier flanc latéral 83. Le deuxième flanc latéral 84 est plein de sorte à retenir la mèche 10 une fois logé dans la cage 80. Sur un premier flanc longitudinal 81, un bras en « L », est disposé et constitue un moyen de préhension MP de la première cartouche 8. Ce bras 810 permet de sortir la première cartouche 8 de l'insert 7. Un ergot 800 est localisé sur le bras 810. Cet ergot 800 coopère avec l'évidement 78 associé à la cavité 75 recevant la première cartouche 8 pour constituer un moyen de retenue MR de la première cartouche 8 dans la cavité 73 associée. Le bras 810 étant flexible, l'ergot 800 peut être délogé de l'évidement 78 de sorte à extraire la première cartouche 8 de l'insert 7. Sur un deuxième flanc longitudinal 82, une nervure 820 est formée. Cette dernière 820 coopère avec la paroi périphérique 71 de l'insert 7 pour maintenir en position la cartouche 8 une fois insérée dans l'insert 7. Ainsi, la nervure 820 constitue un moyen de stabilisation MS de la cartouche 8 dans la cavité 73. Ce moyen de stabilisation MS évite des déplacements de la cartouche 8 lorsque l'insert 7 se déplace en rotation dans le boîtier 2. La première grande face 85 est formée un grillage 87 bordé d'un moyen d'étanchéité ME, tel qu'une bande de plastique souple 88. Le grillage 87 permet à la fois la diffusion de l'agent volatil AV1 imprégné dans la mèche 10 et le maintien de la mèche 10 dans la cartouche 8. La bande de plastique souple 88 coopère avec la paroi périphérique 71 pour éviter une diffusion de l'agent volatil AV1 dans la cavité 73 dans laquelle se trouve la première cartouche 8. La diffusion de l'agent volatil AV1 est alors assurée uniquement par l'orifice 75 de la cavité 73 contenant la première cartouche 8. Ainsi, aucun mélange d'agent volatil n'est possible à l'intérieur de l'insert 7 contenant les deux cartouches 8, 9.

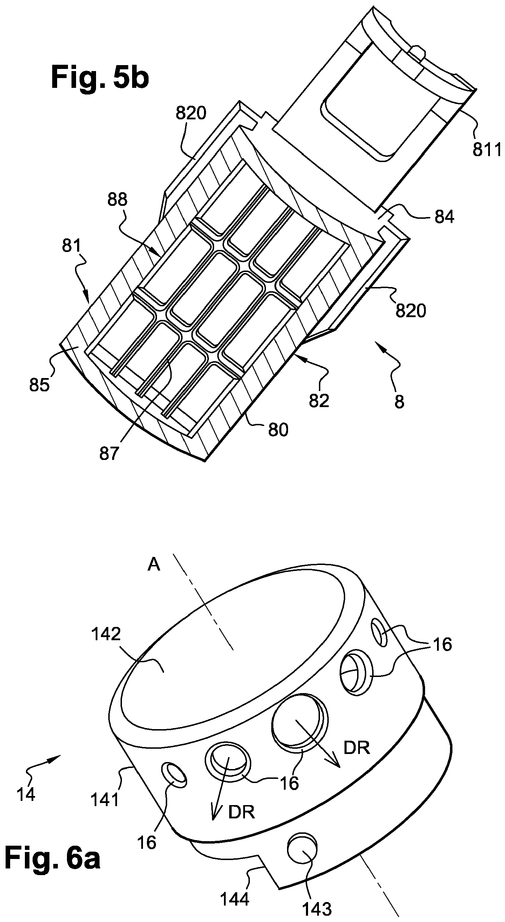

Selon une variante de réalisation de la première cartouche 8 illustrée en figure 5b, le deuxième flanc latéral 84 porte le moyen de préhension MP. Dans ce cas, le moyen de préhension MP est formé par une poignée 811. Comme expliqué plus tard, la poignée 811 est évidée. En outre, les deux flancs longitudinaux 81, 82 comportent chacun un moyen de stabilisation MS. Ainsi, la première cartouche 8 est d'autant plus maintenue dans la cavité 73 selon une unique position. L'ergot 800 est alors localisé sur un des flancs longitudinaux 81, 82.

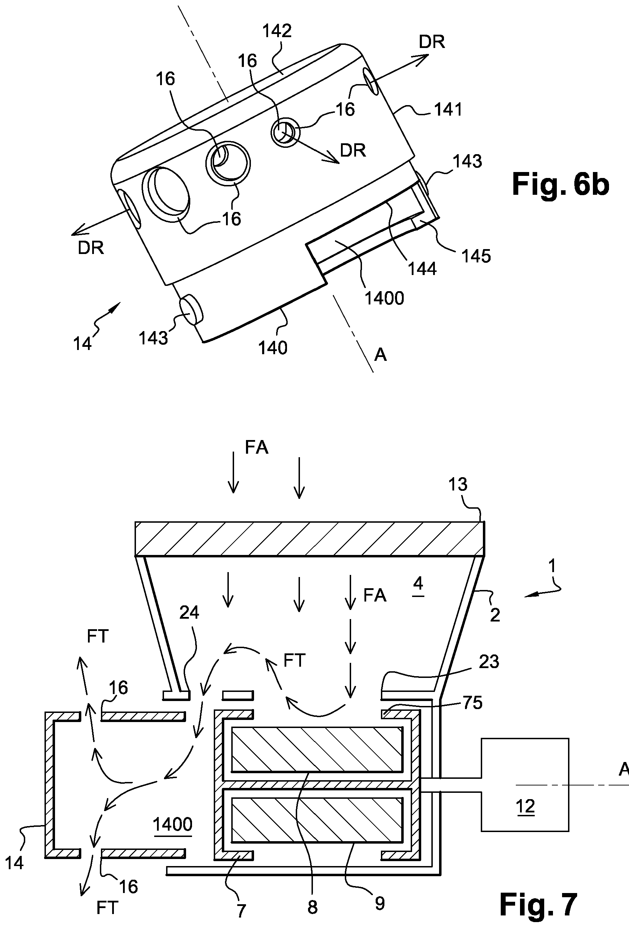

En figures 6a et 6b, un bouchon 14 selon l'invention est représenté. Il est d'une seule pièce en matière plastique, tel que du polypropylène. Le bouchon 14 est un cylindre creux 140 d'axe de rotation A comprenant une paroi cylindrique 141. Le cylindre 140 est fermé à une extrémité par une paroi latérale 142. Le bouchon 14 couvre la sortie d'air traité 5. Des trous 16 sont formés sur le bouchon 14 pour une distribution du flux d'air traité FT selon au moins une direction radiale Dr par rapport à l'axe de rotation A. Plus précisément, les trous 16 sont formés dans la paroi cylindrique 141. Selon une variante de l'invention, le bouchon 14 est muni d'un seul trou 16. La position de ces trous procure en premier lieu un avantage du point de vue du design. A cet égard, les trous 16 ne sont pas visibles par le passager puisqu'ils se situent sur le côté du bouchon 14. Deuxièmement, la localisation particulière de ces trous 16 implique une distribution homogène dans tout l'habitacle du véhicule. Un dispositif de diffusion 1 selon l'invention implanté dans un élément de l'habitacle du véhicule, tel qu'une planche de bord, distribue un flux d'air traité FT via ses trous 16 selon une direction parallèle au plan général de la planche de bord. Ainsi, le flux d'air traité FT n'atteint pas directement une seule zone de l'habitacle, telle que la zone du conducteur, mais est distribué de manière homogène dans toutes les zones de l'habitacle du véhicule. Cette distribution homogène est encore améliorée lorsque le bouchon est pourvu de deux rangées de trous 16 diamétralement opposées. Une protubérance 143 coopère avec la rainure 221 du boîtier 2, permettant de fixer le bouchon 14 sur le boîtier 2. Cette fixation du bouchon 14 sur le boîtier 2 n'est pas définitive. En effet, le bouchon 14 est amovible. La sortie d'air traité 5 couverte par le bouchon 14 étant également la partie du boîtier 2 par laquelle les cartouches 8, 9 sont extraites du dispositif de diffusion 1, le moyen de fixation MF permet de fixer et/ou d'enlever le bouchon 14. La manipulation des cartouches 8, 9 pour les introduire ou les extraire est alors facilitée. Comme décrit plus tard, le bouchon 14 est le seul élément du dispositif de diffusion 1 visible par le passager lorsque ledit dispositif 1 est installé dans l'habitacle du véhicule. En conséquence, une fois le bouchon 14 détaché du boîtier 2, le passager ne voit que la sortie d'air traité 5. Cette sortie d'air traité 5 est alors le seul point d'accès du dispositif de diffusion 1 pour le passager et permet le retrait ou l'introduction d'une cartouche de façon aisée et simplifiée. La protubérance 143 est localisée sur la paroi cylindrique 141 du bouchon 14. Ce moyen de fixation MF est de type baïonnette. De préférence, le bouchon 14 est muni de deux protubérances 143 diamétralement opposées, comme illustré dans la figure 6b. Dans ce cas, la paroi interne 220 du boîtier 2 comporte deux rainures 221 correspondantes. Il est à noter que le bouchon 14 est fixe par rapport au boîtier 2 lorsque le dispositif de diffusion 1 est mis en oeuvre. Préférentiellement, la pluralité de trous 16 est disposée selon deux rangées diamétralement opposées. En figure 6a, une première rangée 160 de cinq trous 16 est formée sur la paroi cylindrique 141. Une deuxième rangée 161 est disposée symétriquement par rapport à l'axe de rotation A. On entend par « rangée » au moins deux trous alignés sur un même cercle dont le centre passe par l'axe de rotation A.

Le bouchon 14 délimite une chambre de distribution 1400 d'air traité. Plus précisément, la paroi cylindrique 141 et la paroi latérale 142 définissent un volume correspondant à la chambre de distribution 1400. Cette dernière 1400 comprend une sortie d'air réalisée par le ou les trous 16 et une entrée d'air formée par une encoche 144. Lorsque le bouchon 14 est fixé au boîtier 2, cette encoche 144 est en regard de la fente 24. De ce fait, l'encoche 144 et la fente 24 assurent la communication aéraulique entre la chambre de diffusion 4 et la chambre de distribution 1400. Cette chambre de distribution 1400 loge le moyen de préhension de chaque cartouche 8, 9. Afin que les moyens de préhension ne nuisent pas à la distribution et l'évacuation du flux d'air traité FT via les trous 16, ils sont conformés de sorte à ne pas être un obstacle au flux d'air traité FT. Par exemple, pour le moyen de préhension de la figure 5b, la poignée 811 est évidée. Ainsi, cette poignée 811 a une forme générale en « U » et occupe un faible espace de la chambre de distribution 1400.

Selon une variante de l'invention, le dispositif de diffusion 1 comprend un moyen de verrouillage MV interdisant le détachement du bouchon 14 lorsque l'insert 7 est dans une position de fonctionnement. Ce moyen de verrouillage MV comprend un crochet 700 situé sur le premier côté ouvert 710 de l'insert 7 coopérant avec un rebord périphérique 145 du bouchon 14. Lorsque le passager souhaite retirer le bouchon 14 alors que le dispositif de diffusion 1 est en fonctionnement (position de non diffusion ou une des positions de diffusion), le bouchon 14 est bloqué par le crochet 700. Ce dernier 700 retient le bouchon 14 par son rebord périphérique 145. Pour déverrouiller le bouchon 14, deux étapes sont nécessaires. D'un part, l'insert 7 doit être dans une position dite de rechange de cartouche. Cette position correspond à une inclinaison de 10° par rapport à la position de non diffusion dans laquelle l'insert 7 obture totalement la fenêtre 23. Dans cette position de rechange de cartouche, le crochet 700 est déplacé jusqu'à la seule position dans laquelle le bouchon peut être libéré. Ensuite, le bouchon est tourné pour dégager la protubérance 143 de la rainure 221. Dans cette configuration, le crochet 700 et l'entaille du rebord périphérique 145 sont alors en face-à-face. Le rebord périphérique 145 n'est alors plus retenu par le crochet 700 lorsqu'un passager tire sur le bouchon 14. On comprend donc que pour fixer ou retirer le bouchon 14 sur le boîtier 2, l'insert 7 doit être dans une position particulière afin que son crochet 700 ne puisse pas coopérer avec le rebord périphérique 145. Il est à noter que pour chaque cartouche, il existe une position distincte de rechange.

Le dispositif de diffusion 1 est relié à un système de commande 18. Ce dernier contrôle l'actionneur électrique 12 et le pulseur 13. L'actionneur électrique 12 est du type actionneur pas-à-pas. Une fois le dispositif de diffusion 1 mis sous tension, le système de commande permet au passager de choisir différents paramètres tels que le débit du flux d'air traité et/ou l'agent volatil AV1, AV2 diffusé dans l'habitacle. Recevant des données de commande du système de commande 18, l'actionneur 12 positionne l'insert 7 de sorte à diffuser l'agent volatil AV1 choisi par le passager. Cette diffusion de l'agent volatil AV1 peut être totale ou partielle selon la position de l'insert 7. En d'autres termes, le passager peut choisir entre différentes intensités de diffusion de l'agent volatil sélectionné. On entend par diffusion « totale » le fait que le grillage 87 de la cartouche 8 soit complètement en vis-à-vis de la fenêtre 23, le flux d'air ambiant FA impactant la mèche 10 en totalité. On entend par diffusion « partielle » le fait qu'une partie du grillage 87 de la cartouche 8 soit masqué par la paroi interne 220 du cylindre creux 22 et que l'autre partie du grillage soit en vis-à-vis de la fenêtre 23. Ainsi, le flux d'air ambiant FA n'impacte qu'une partie de la mèche 10. Pour éviter une accoutumance du passager au premier agent volatil AV1, l'actionneur 12 modifie le débit du pulseur 13 et/ou la position de l'insert 7. Par exemple, le débit du pulseur 13 fonctionne selon un cycle tel que un débit maximum pendant 20 secondes puis un débit minimum pendant 40 secondes. Autre exemple, l'insert 7 est positionné pour une diffusion totale pendant 20 secondes puis pour une diffusion partielle pendant 40 secondes. Une combinaison du réglage du débit du pulseur 13 et de la position de l'insert 7 est aussi un exemple. Ainsi, le flux d'air traité est diffusé dans l'habitacle de manière discontinue, ce qui évite une accoutumance du passager de la présence d'agent volatil dans l'air de l'habitacle. Les mêmes réglages d'intensité sont disponibles pour la diffusion de l'agent volatil AV2. Le système de commande 18 relié à l'actionneur électrique 12 et au pulseur 13 assure une utilisation du dispositif de diffusion quasi automatique. En effet, le système de commande 18 assure à la fois la mise sous tension du dispositif de diffusion, la sélection de l'agent volatil à diffuser et l'intensité de cette diffusion. Seul le changement de cartouche est dit manuel puisque le passager doit retirer le bouchon du dispositif et extraire la cartouche à changer via son moyen de préhension.

En s'appuyant sur les figures 7, 2a et 2b, le mode de fonctionnement du dispositif de diffusion 1 va être décrit. En figure 2a, le dispositif de diffusion 1 est dans une première position P1 de non diffusion. L'insert 7 est déplacé par l'actionneur 12 de sorte que sa paroi périphérique 71 obture totalement la fenêtre 23. Le flux d'air ambiant FA propulsé par le pulseur 13 impacte alors la paroi périphérique 71 au niveau de sa partie pleine et ne rencontre aucune des deux mèches logées dans l'insert 7. En figures 2b et 7, l'insert 7 est positionné de sorte à ce que un premier orifice 75 soit en face de la fenêtre 23. Cette position de l'insert correspond à une deuxième position P2 de diffusion d'un premier agent volatil AV1. Le flux d'air ambiant FA, traversant la chambre de diffusion 4, impacte la première mèche 10 et se charge en agent volatil AV1. Le flux d'air traité FT, c'est-à-dire le flux d'air contenant l'agent volatil AV1, est évacué de la chambre de diffusion 4 par l'intermédiaire de la fente 24. Sortant de la fente 24, le flux d'air traité FT atteint la chambre de distribution 1400 formée par le bouchon 14. Enfin, le flux d'air traité FT est évacué à travers les trous 16 du bouchon 14. La direction Dr du flux d'air traité FT est radiale par rapport à l'axe de rotation A de l'insert 7. Il est à noter que le bouchon 14 ne se déplace pas pendant le fonctionnement du dispositif de diffusion 1. Pour la diffusion du deuxième agent volatil AV2, l'actionneur électrique 12 fait tourner l'insert 7 de sorte à ce que la deuxième mèche 11 se trouve en vis-à-vis de la fenêtre 24.

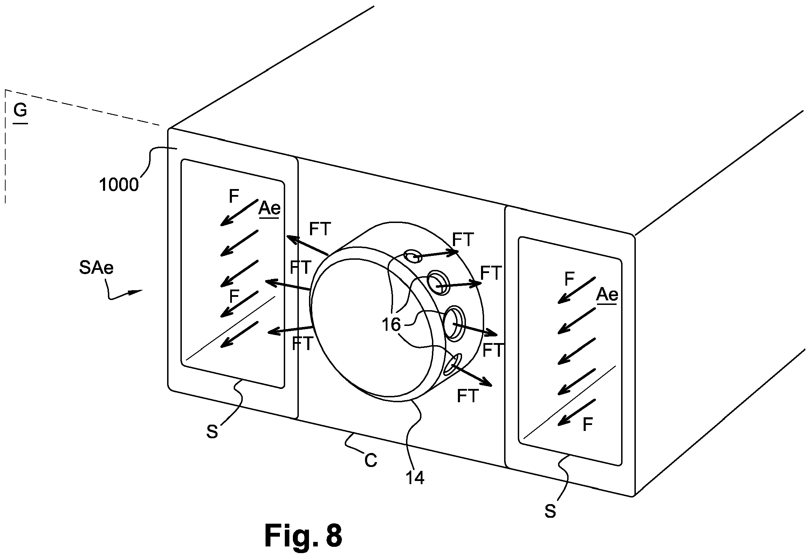

Le dispositif de diffusion 1 accentue son action de distribution d'agent volatil lorsqu'il coopère avec au moins aérateur Ae d'un habitacle de véhicule. En figure 8 est illustré un support d'aérateur SAe comprenant un cadre C et deux aérateurs Ae. Les deux aérateurs Ae ont leur sortie S respective dans un plan G contenant la façade 1000 du support d'aérateur SAe. Il est à noter que le support d'aérateur peut comprendre un seul aérateur Ae. Le support d'aérateur SAe fait partie de la planche de bord du véhicule automobile et est en relation avec le système de ventilation, chauffage et/ou climatisation via ses aérateurs Ae délivrant dans l'habitacle le flux d'air F en provenance du système de ventilation, chauffage et/ou climatisation non représenté. Par exemple, le support d'aérateur SAe se localise au centre de la planche de bord, les deux aérateurs du support correspondant alors aux aérateurs centraux d'un véhicule automobile. Le dispositif de diffusion 1 est logé dans le support d'aérateur SAe de telle sorte que le flux d'air traité FT en sortie d'un trou 16 rencontre le flux d'air F sortant de l'aérateur Ae. Plus précisément, le seul élément constituant le dispositif de diffusion 1 visible par un passager du véhicule est le bouchon 14. Ce dernier 14 est en saillie par rapport au plan G. De plus, l'axe de rotation A est parallèle à l'axe longitudinal du véhicule automobile. Plus précisément, la direction générale de circulation d'air traité FT est perpendiculaire à la direction du flux d'air F sortant de l'aérateur Ae. La rencontre des deux flux d'air améliore la diffusion de l'agent volatil AV1, AV2 dans l'habitacle du véhicule. En ce sens, la distribution du flux d'air traité FT selon une direction radiale Dr en combinaison avec le flux d'air F crée un flux d'air résultant FR se propageant dans l'habitacle du véhicule selon de multiples directions distinctes. En conséquence, la perception de l'agent volatil par les passagers est rapide et ce, quelque soit la position de chaque passager, tel que la place du conducteur et/ou les places arrières du véhicule.

## Revendications

1. Dispositif de diffusion (1) pour véhicule automobile d'au moins un agent volatil (AV1, AV2), comprenant un boîtier (2) comportant une entrée d'air ambiant (3), une sortie d'air traité (5), une chambre de diffusion (4) apte à recevoir un insert (7), ledit insert logeant l'agent volatil (AV1, AV2), ladite chambre de diffusion (4) étant en communication avec l'entrée d'air frais (4) et la sortie d'air traité (5), le dispositif comprenant en outre un actionneur électrique (12) entraînant en rotation l'insert (7) selon un axe de rotation (A) et un pulseur (13) fixé sur le boîtier (2), **caractérisé en ce que** la chambre de diffusion (4) reçoit l'insert (7) via la sortie d'air traité (5), **en ce que** ledit dispositif comporte un bouchon (14) couvrant une sortie d'air traité (5) du boîtier (2), des trous 16 étant disposés sur le bouchon (14) pour permettre l'évacuation du flux d'air traité (FT) du dispositif de diffusion 1 et **en ce que** ledit dispositif de diffusion (1) est apte à être logé dans un support d'aérateur (SAe) de telle sorte qu'un flux d'air traité (FT) en sortie d'un trou (16) rencontre le flux d'air F sortant de l'aérateur Ae.

2. Dispositif (1) selon la revendication 1, dans lequel l'insert (7) comprend au moins une cartouche (8, 9) logeant un parmi au moins un agent volatil (AV1, AV2), ladite cartouche (8, 9) étant introduite dans le boîtier (2) ou extraite du boîtier (2) par l'intermédiaire de la sortie d'air traité (5).

3. Dispositif (1) selon l'une quelconque des revendications 1 à 2, dans lequel l'insert (7) comprend au moins deux agents volatils (AV1, AV2) distincts.

4. Dispositif (1) selon l'une quelconque des revendications 1 à 2, dans lequel un système de commande est relié à l'actionneur (12), ledit système de commande permettant de sélectionner au moins une position (P1, P2, P3) de l'insert (7) pour la diffusion ou non d'un des deux agents volatils (AV1, AV2) et/ou de régler le débit du flux d'air traité (FT).

5. Dispositif (1) selon l'une quelconque des revendications précédentes, dans lequel un réglage du niveau d'intensité du flux d'air traité (FT) est effectuée par l'actionneur (12) en faisant varier la position de l'insert (7) par rapport à une fenêtre (23) du boîtier (2)

6. Dispositif (1) selon la revendications 2, dans lequel chaque cartouche (8, 9) est maintenue dans l'insert (7) par un moyen de retenue (MR).

## Patentansprüche

1. Vorrichtung zum Ausströmen (1) wenigstens eines flüchtigen Wirkstoffs (AV1, AV2) für ein Kraftfahrzeug, welche ein Gehäuse (2) umfasst, das einen Einlass für Umgebungsluft (3), einen Auslass für behandelte Luft (5) und eine Ausströmkammer (4), die geeignet ist, einen Einsatz (7) aufzunehmen, aufweist, wobei der Einsatz den flüchtigen Wirkstoff (AV1, AV2) aufnimmt, wobei die Ausströmkammer (4) mit dem Frischlufteinlass (4) und dem Auslass für behandelte Luft (5) in Verbindung steht, wobei die Vorrichtung außerdem einen elektrischen Aktuator (12), der den Einsatz (7) um eine Drehachse (A) drehend antreibt, und ein am Gehäuse (2) befestigtes Gebläse (13) umfasst, **dadurch gekennzeichnet, dass** die Ausströmkammer (4) den Einsatz (7) über den Auslass für behandelte Luft (5) aufnimmt, dadurch, dass die Vorrichtung einen Verschlussstopfen (14) aufweist, der einen Auslass für behandelte Luft (5) des Gehäuses (2) bedeckt, wobei an dem Verschlussstopfen (14) Löcher (16) angeordnet sind, um das Auslassen des Stroms behandelter Luft (FT) aus der Ausströmvorrichtung (1) zu ermöglichen, und dadurch, dass die Ausströmvorrichtung (1) geeignet ist, in einer Lufttrichterhalterung (SAe) aufgenommen zu werden, derart, dass ein aus einem Loch (16) austretender Strom behandelter Luft (FT) auf den Luftstrom F trifft, der aus dem Lufttrichter Ae austritt.

2. Vorrichtung (1) nach Anspruch 1, wobei der Einsatz (7) wenigstens eine Patrone (8, 9) umfasst, die einen von wenigstens einem flüchtigen Wirkstoff (AV1, AV2) aufnimmt, wobei die Patrone (8, 9) über den Auslass für behandelte Luft (5) in das Gehäuse (2) eingeführt oder aus dem Gehäuse (2) herausgezogen wird.

3. Vorrichtung (1) nach einem der Ansprüche 1 bis 2, wobei der Einsatz (7) wenigstens zwei verschiedene flüchtige Wirkstoffe (AV1, AV2) umfasst.

4. Vorrichtung (1) nach einem der Ansprüche 1 bis 2, wobei ein Steuerungssystem mit dem Aktuator (12) verbunden ist, wobei das Steuerungssystem ermöglicht, wenigstens eine Position (P1, P2, P3) des Einsatzes (7) für das Ausströmen oder Nichtausströmen eines der zwei flüchtigen Wirkstoffe (AV1, AV2) auszuwählen und/oder die Durchflussmenge des Stroms behandelter Luft (FT) zu regeln.

5. Vorrichtung (1) nach einem der vorhergehenden Ansprüche, wobei eine Regelung der Stärke des Stroms behandelter Luft (FT) von dem Aktuator (12) bewirkt wird, indem er die Position des Einsatzes (7) bezüglich eines Fensters (23) des Gehäuses (2) ändert.

6. Vorrichtung (1) nach Anspruch 2, wobei jede Patrone (8, 9) von einem Haltemittel (MR) in dem Einsatz (7) gehalten wird.

## Claims

1. Diffusion device (1) for a motor vehicle, for at least one volatile agent (AV1, AV2), comprising a housing (2) comprising an ambient air inlet (3), a treated air outlet (5), a diffusion chamber (4) capable of receiving an insert (7), said insert housing the volatile agent (AV1, AV2), said diffusion chamber (4) being in communication with the fresh air inlet (4) and the treated air outlet (5), the device further comprising an electric actuator (12) rotating the insert (7) about an axis of rotation (A) and a blower (13) fixed on the housing (2), **characterized in that** the diffusion chamber (4) receives the insert (7) via the treated air outlet (5), **in that** said device comprises a cap (14) covering a treated air outlet (5) of the housing (2), with holes 16 being disposed on the cap (14) to allow the treated air flow (FT) to be discharged from the diffusion device 1, and **in that** said diffusion device (1) is capable of being housed in a diffuser support (SAe) so that a treated air flow (FT) exiting a hole (16) encounters the air flow F exiting the diffuser Ae.

2. Device (1) according to Claim 1, wherein the insert (7) comprises at least one cartridge (8, 9) housing one from among at least one volatile agent (AV1, AV2), said cartridge (8, 9) being introduced into the housing (2) or extracted from the housing (2) through the treated air outlet (5).

3. Device (1) according to either of Claims 1 and 2, wherein the insert (7) comprises at least two distinct volatile agents (AV1, AV2).

4. Device (1) according to either of Claims 1 and 2, wherein a control system is connected to the actuator (12), said control system allowing at least one position (P1, P2, P3) of the insert (7) to be selected for the diffusion or non-diffusion of one of the two volatile agents (AV1, AV2) and/or the rate of the treated air flow (FT) to be adjusted.

5. Device (1) according to any of the preceding claims, wherein an adjustment of the intensity level of the treated air flow (FT) is performed by the actuator (12) by varying the position of the insert (7) relative to a window (23) of the housing (2).

6. Device (1) according to Claim 2, wherein each cartridge (8, 9) is retained in the insert (7) by a retention means (MR).
